# EUROPEAN PATENT SPECIFICATION

(11) **EP 3 376 824 B1**
(45) Date of publication and mention of the grant of the patent: **13.11.2019**
(21) Application number: 17176971.4
(22) Date of filing: 20.06.2017
(51) Int. Cl.: H05B 1/02, H02M 7/5387, C21D 11/00

(54) **ELECTRICAL/ELECTRONIC CONTROL EQUIPMENT FOR HEATING METALLIC WORKPIECES**
ELEKTRISCHES / ELEKTRONISCHES KONTROLLGERÄT FÜR DIE HEIZUNG VON METALLWERKSTÜCKEN
ÉQUIPEMENT DE CONTRÔLE ÉLECTRIQUE/ÉLECTRONIQUE POUR LE CHAUFFAGE DE PIÈCES À USINER MÉTALLIQUES

(30) Priority: 16.03.2017 BR 102017005401
(43) Date of publication of application: 19.09.2018
(73) Proprietor: Aethra Sistemas Automotivos S/A, 32660-000 Minas Gerais Betim (BR)
(72) Inventor: SPORTELLI, PIETRO, 32686-190 Betim Minas Gerais (BR)
(74) Representative: Pereira da Cruz, Joao

(56) References cited:
- CN-U- 205 305 204
- US-B1- 7 285 761

## Description

### FIELD OF THE INVENTION

This patent, relating to the processing industry, is about an electrical/electronic equipment that allows the safe an practical heating of metallic workpieces by Joule effect.

### STATE OF THE ART OF THE INVENTION

The electric current, when crossing a conductor, causes an increase in temperature that can be calculated by "Joule's Law", also known as Joule effect or thermal effect, in honor of James Prescott Joule (1818-1889), who studied the phenomenon in 1840. This physical law expresses the relation between the heat generated and the electric current flowing through a conductor at a given time. For example: a resistor is a device that, by means of current flow, transforms the electric energy integrally into heat.

In the current state of the art, applying the Joule effect in the industry has practically boiled down to the manufacture of various electrical appliances such as lamps and fuses, where Joule's Law, together with other physical laws, allows calculating the dimensions suitable for correct operation of such devices.

This phenomenon is widely used in manufacturing household appliances as a basis for electric heating devices such as electric irons, electric showers, hair smoothing boards, electric ovens etc., all of which are basically composed of an electrical resistance which, upon being traversed by the electric current, is heated by transforming electric energy into thermal energy, that is to say, heat. Another practical application of the Joule effect in daily life is in incandescent lamps, invented in the 19th century by Thomas Edison. This lamp has a tungsten filament in its inside, a metal with a very high melting point, which upon being traversed by the electric current gets heated, being able to reach temperatures of 2500°C, becoming incandescent and emitting light.

Industrially, this effect is also used in the welding of metallic workpieces, where the electric current (by means of the Joule effect) heats one point between two plates to the melting point of the metals, thus, welding both; as well as in the production of fuses, which are devices consisting of a low-melting point metallic filament used to protect an electric circuit by interrupting any electric current exceeding a certain value. These devices, used as limiters of the electric current that flows through an electric circuit, can be found in automotive vehicles, housings, electrical appliances, etc.

However, Joule's Law is little used in the industry, practically restricting its use in the production of heat in industrial furnaces and not applying it to the heating of metallic workpieces for heat treatment because of its dangerous drawbacks. And this is due, in large part, to the fact that the application of the electric energy in the production of heat corresponds to losses and in some situations to the source of more or less serious damages, especially when there is a short circuit or a bad contact. In this case, it is necessary to use duly gauged conductors to support the current, as well as to provide the appropriate protection and insulation, as well as efficient current control systems, something difficult to accomplish.

### SUMMARY OF THE INVENTION

In this regard, this patent provides an apparatus which extends the range of use of Joule's Law by allowing it to be applied in the direct heating of metallic workpieces for hot stamping or in the heat treatment of these workpieces, among other possible industrial applications, because it offers less heating time, since practically all energy applied is converted into heat. This equipment performs precise control of the temperature of the workpiece to be stamped through real-time reading, through data processing, of the temperature that allows for automatic adjustment of the electric current frequency and voltage values.

This is a low-energy equipment, where all power is generated in the intermediate electronic circuit of a power controller, by means of the IGBT's (Insulated Gate Bipolar Transistor) switching. It is a compact equipment that can be mounted in a small space, due to its reduced volume, with a high heating rate, and allowing to reach a degree of heating of metallic workpieces up to 400°C/sec, up to twice as fast as the heating done by induction and 61 times faster than radiation heating.

The electrical/electronic equipment for heating metallic workpieces, subject of this patent, can be better understood by referring to the attached figures, which are part of this descriptive report and contain numerical references together with the description of their technical features. These figures do neither restrict their configuration as to dimensions, proportions, possible types of finishing used, nor the range of their practical applications.

### BRIEF DESCRIPTION OF THE DRAWINGS

Figure 1 shows a general diagram of the equipment.
Figure 2 shows in detail the internal diagram of the heating controller.
Figure 3 shows an illustration in three views of the power transformer.

### DETAIL DESCRIPTION OF THE INVENTION

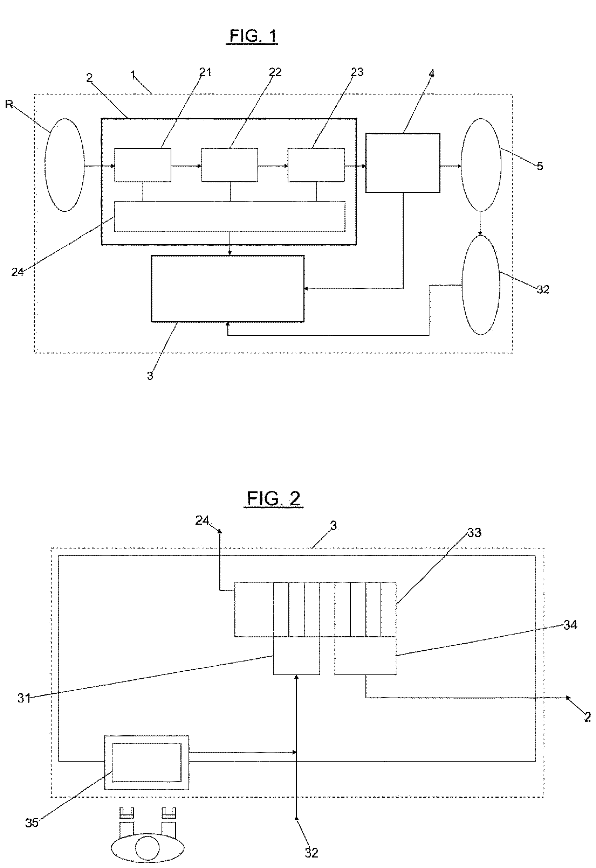

According to these figures and their numerical references, this patent is about to an electrical/electronic equipment for heating workpieces (1) composed of the following: an adjustable power driver (2); a heating and data acquisition controller (3); and a power transformer (4). See figure 1.

This electrical/electronic equipment for heating workpieces (1) is powered by the electrical power grid (R) of its installation premises, which provides the power transformer all the necessary energy during the heating, generating voltage and frequency, which may be either three-phase and/or single-phase, adjustable by the various pre-set parameters in order to control the heating process by means of the heating controller and data acquisition (3) via an adjustable power driver (2). Such closed-loop control (by PID - Proportional Integral Derivative Controller) is done upon receiving the signals from the pre-set parameters of the heating and data acquisition controller (3) to provide the electrical power (voltage and current) necessary for achieving a homogeneous heating of the workpiece (5).

In this electric/electronic equipment for heating workpieces (1) the adjustable power driver (2) is formed by: a rectifier circuit (21), which converts the "AC" (alternating current) energy into "DC" power (direct current); a filter (22) formed by capacitors to smooth the circuit output; a changeover circuit (23) which is a network of "IGBT'S" power transistors that operate by the "Pulse Width Modulation" (PWM) control method where the "DC" is switched on and off quickly by the transistors in order to obtain a variable frequency and voltage output; a microprocessor control unit (24) responsible for the "IGBT'S" firing" control. This microprocessor unit (24) performs all of the "control logic" and pulse generation, and it is also there that all the parameters and data of the adjustable power driver (2) are stored.

Said adjustable power driver (2) may also contain a "DC" or an "AC" output (direct current or alternate current), depending on the need, and its function, upon receiving the "start" command of the heating and data acquisition controller (3) is to directly deliver to the workpiece (5) an adjustable frequency alternate voltage whose magnitude is related to the control reference established by the heating and data acquisition controller (3), thus, compensating for possible variations in the electric circuit, being able to obtain a voltage and linear profile current at the output; furthermore, allowing the possibility of creating a control program where frequency and voltage can be independently controlled within its working range.

Said heating and data acquisition controller (3) is a microprocessor device composed of inputs (31), in the form of temperature sensors (32) or thermal cameras, electric current meters, electric voltage meters etc.; a processing unit (33), which collects and processes all pre-set inputs and parameters and provides output values from a pre-set logic ("algorithm"); digital/analog outputs (34), which provide the signals needed to control the adjustable power controller (2) during heating; a CIP (Control and Information Protocol) communication standard "Ethernet IP", which allows interconnection with supervisory systems for remote monitoring and startup, see figure 2.

The controller for heating and data acquisition (3) is based on the running of a dedicated program previously stored in the memory of the processing unit (33), acting to control the uniform distribution of power used in heating. In addition to the inlet 31 and the outputs 34, there is also an "HMI" (Human-Machine Interface) (35), which allows the insertion of specific heat control parameters obtained in the processing unit (33).

The power transformer (4) used has specific construction features, the secondary winding (41) being different from the primary winding (42). These windings are physically isolated from each other and consisting of flat conductors and rounded corners, generally of two simple turns that are responsible for conducting the electric current in the equipment, and the "transformation" ratio of the primary (41) to the secondary (42) is defined by the number of windings (number of turns). Each winding has its respective input (43) and output (44) to be connected (serial or parallel) to the adjustable power driver (2) of the electrical/electronic equipment for heating workpieces (1).

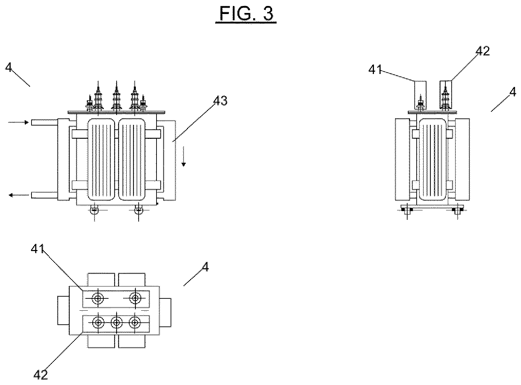

The power transformer cooler (4) contains extruded cavities in the secondary core (41) through which cooled water (45) flows. Its construction is reinforced and has no moving parts. At its core, two types of materials are used: a conventional silicon steel and a grain oriented steel, commonly known as "Hypersil" (high-permeability silicon steel), see figure 3.

Purpose of the power transformer (4) is to convert the voltage and current values provided by the adjustable power controller (2) to the levels applied directly to the workpiece (5) to be heated from a defined (primary/secondary) transformation ratio.

In practice, the electrical/electronic equipment for heating workpieces (1) can be used in any industrial production process or system requiring rapid, homogeneous and controlled heating of metallic sheets for hot stamping or heat treatment of metallic workpieces (5), among other industrial applications, because it offers less heating time and full utilization of the energy used, since practically all the applied energy is converted into heat.

## Claims

1. Electrical/electronic control equipment for heating metallic workpieces (1) comprising the following parts:
an adjustable power driver (2), a heating and data acquisition controller (3), a power transformer (4); the adjustable power driver (2) contains a rectifier (21) which converts "AC" energy into "DC", a filter (22), a changeover circuit (23), a microprocessor control unit (24) and optionally a "DC" or "AC" output; the data acquisition and heating controller (3) contains inputs (31), sensors (32) processing unit (33), digital/analog outputs (34) **characterised in that**
said changeover circuit (23) being a network of IGBT or Insulated Gate Bipolar Transistor power transistors operable by a Pulse Width Modulation or PWM control method, said transistors switching on and off the "DC", obtaining a variable frequency and voltage output and said IGBT or Insulated Gate Bipolar Transistor power transistors firing controlled by the microprocessor control unit (24);
said data acquisition and heating controller (3) containing an HMI or Human Machine Interface (34) and standard "Ethernet IP" communication;
said power transformer (4) having a secondary winding (41) and a primary winding (42) each one having respective input (43) and output (44) connected to the adjustable power driver (2) converting the voltage and current values into heat; and
said power transformer (4) containing extruded cavities for the circulation of cooled water (43) in its secondary core (41).

2. Electrical/electronic control equipment **according to claim 1, characterized in that** from the control of the heating and data acquisition controller (3), the adjustable power driver (2) provides the power transformer (4) all necessary energy during heating and is responsible for the supply of all the heating energy demand.

3. Electrical/electronic control equipment **according to claims 1 and 2, characterized in that** the adjustable power driver (2) generates adjustable voltages and frequencies, which may be either three-phase and/or single-phase, through various pre-set parameters.

4. Electrical/electronic control equipment **according to claim 1, characterized in that** the adjustable power driver (2) performs the closed-loop control "PID" - Proportional Integral Derivative Controller (PID controller) receiving signals from the heating and data acquisition controller (3), through its pre-set parameters.

5. Electrical/electronic control equipment **according to claim 1, characterized in that** the heating and data acquisition controller (3) is a microprocessor device composed of inputs (31) in the form of temperature sensors (32) or thermal cameras, electric current and voltage meters etc., a processing unit (33), digital/analog outputs (34), a CIP (Control and Information Protocol) communication standard "Ethernet IP", and an "HMI" (Human Machine Interface) (35).

## Patentansprüche

1. Elektrisches/elektronisches Steuergerät für das Aufheizen von metallischen Werkstücken (1), die folgende Teile umfasst: einen einstellbaren Leistungstreiber (2), eine Beheizungs- und Datenerfassungskontrolleinheit (3), einen Leistungstransformator (4); der einstellbare Leistungstreiber (2) umfasst einen Gleichrichter (21), welcher "AC" Energie in "DC" Energie konvertiert, einen Filter (22), eine Wechslerschaltung (23), eine Mikroprozessorsteuereinheit (24), und gegebenfalls einen "DC" oder "AC" Ausgang; die Beheizungs- und Datenerfassungskontrolleinheit (3) umfasst Eingänge (31), Sensoren (32), Verarbeitungseinheit (33), digitale/analoge Ausgänge (34), **dadurch gekennzeichnet, dass**
die besagte Wechslerschaltung (23) ein Netzwerk aus IGBT oder *Insulated Gate Bipolar Transistor* Leistungstransistoren ist, bedienbar durch eine Pulsweitenmodulation oder PWM Kontrollverfahren, die besagten Transistoren schalten den "DC" ein und aus, und erhalten so einen variablen Frequenz- und Spannungsausgang und die besagten IGBT oder *Insulated Gate Bipolar Transistor* Leistungstransistoren Abschüsse werden durch die Mikroprozessorsteuereinheit (24) kontrolliert;
die besagte Beheizungs- und Datenerfassungskontrolleinheit (3) umfasst einen HMI oder *Human Machine Interface* (34) und standardmäßige "Ethernet-IP" Kommunikation;
der besagte Leistungstransformator (4) hat eine sekundäre Windung (41) und eine primäre Windung (42), jede dieser hat jeweiligen Eingang (43) und Ausgang (44) mit dem einstellbaren Leistungstreiber (2) verbunden, indem es die Spannungs- und Stromwerte in Wärme konvertiert; und
der besagte Leistungstransformator (4) umfasst, für den Umlauf von gekühltem Wasser (43) in dessem sekundären Kerngehäuse (41), extrudierte Hohlräume.

2. Elektrisches/elektronisches Steuergerät **nach Anspruch 1, dadurch gekennzeichnet, dass** der einstellbare Leistungstreiber (2) durch die Steuerung der Beheizungs- und Datenerfassungskontrolleinheit (3) den Leistungstransformator (4) mit der ganzen erforderlichen Energie während der Beheizung versorgt und für die Lieferung des ganzen Heizenergiebedarfs aufkommt.

3. Elektrisches/elektronisches Steuergerät **nach Ansprüchen 1 und 2, dadurch gekennzeichnet, dass** der einstellbare Leistungstreiber (2) einstellbare Spannungen und Frequenzen erzeugt, welche entweder dreiphasig und/oder einphasig sein können, durch mehrere vorgegebene Parameter.

4. Elektrisches/elektronisches Steuergerät **nach Anspruch 1, dadurch gekennzeichnet, dass** der einstellbare Leistungstreiber (2) den geschlossenen Regelkreis "PID" - *Propotional Integral Derivative Controller* (PID-Regler) durchführt, indem er Signale von der Beheizungs- und Datenerfassungskontrolleinheit (3) aufnimmt, durch dessen vorgegebenen Parameter.

5. Elektrisches/elektronisches Steuergerät **nach Anspruch 1, dadurch gekennzeichnet, dass** die Beheizungs- und Datenerfassungskontrolleinheit (3) ein Mikroprozessorgerät ist, die aus Eingängen (31) in Form von Temperatursensoren (32) oder Wärmekameras, elektrischen Strom- und Spannungszählern etc., einer Verarbeitungseinheit (33), digitale/analoge Ausgänge (34), einem CIP (*Control and Information Protocol*) Kommunikation standardmäßig "Ethernet-IP" und einem "HMI" (*Human Machine Interface*) (35) besteht.

## Revendications

1. Équipement de contrôle électrique/électronique pour le chauffage de pièces à usiner métalliques comprenant les éléments suivants : un dispositif de commande de puissance réglable (2), un contrôleur de chauffage et d'acquisition de données (3), un transformateur de puissance (4) ; le dispositif de commande de puissance réglable (2) contient un redresseur (21) qui convertit l'énergie CA en énergie CC, un filtre (22), un circuit de permutation (23), une unité de commande à microprocesseur (24) et, facultativement, une sortie CC ou CA ; le contrôleur de chauffage et d'acquisition de données (3) contient des entrées (31), des capteurs (32), une unité de traitement (33), des sorties numériques/analogiques (34), **caractérisé en ce que** ledit circuit de permutation (23) est un réseau de transistors de puissance IGBT ou transistors bipolaires à grille isolée actionnés par un procédé de commande à modulation de largeur d'impulsions ou PWM, lesdits transistors activant et désactivant le CC pour obtenir une sortie de tension et fréquence variable, et l'amorçage desdits transistors de puissance IGBT ou transistors bipolaires à grille isolée étant contrôlé par l'unité de commande à microprocesseur (24) ;
ledit contrôleur de chauffage et d'acquisition de données (3) contient une IHM ou interface homme-machine (34) et une norme de communication « Ethernet IP » ;
ledit transformateur de puissance (4) a un enroulement secondaire (41) et un enroulement primaire (42), chacun ayant l'entrée (43) et la sortie (44) respective reliée au dispositif de commande de puissance réglable (2) pour convertir les valeurs de tension et de courant en chaleur ; et
ledit transformateur de puissance (4) contient des cavités extrudées pour la circulation d'eau refroidie (43) dans son noyau secondaire (41).

2. Équipement de contrôle électrique/électronique selon la revendication 1, **caractérisé en ce qu'**à partir du contrôle du contrôleur de chauffage et d'acquisition de données (3), le dispositif de commande de puissance réglable (2) fournit au transformateur de puissance (4) toute l'énergie nécessaire pendant le chauffage et assure l'approvisionnement de toute la demande d'énergie de chauffage.

3. Équipement de contrôle électrique/électronique selon les revendications 1 et 2, **caractérisé en ce que** le dispositif de commande de puissance réglable (2) génère des tensions et fréquences réglables, qui peuvent être triphasées et/ou monophasées, au moyen de divers paramètres prédéfinis.

4. Équipement de contrôle électrique/électronique selon la revendication 1, **caractérisé en ce que** le dispositif de commande de puissance réglable (2) réalise la commande en boucle fermée « PID » - régulateur proportionnel intégral dérivé (régulateur PID), en recevant des signaux du contrôleur de chauffage et d'acquisition de données (3), au moyen de ses paramètres prédéfinis.

5. Équipement de contrôle électrique/électronique selon la revendication 1, **caractérisé en ce que** le contrôleur de chauffage et d'acquisition de données (3) est un dispositif à microprocesseur composé d'entrées (31) sous forme de capteurs de température (32) ou caméras thermiques, compteurs de courant électrique et de tension, etc., d'une unité de traitement (33), de sorties numériques/analogiques (34), d'une norme de communication CIP (protocole de contrôle et d'information) « Ethernet IP » et d'une interface homme-machine (IHM) (35).
